# EUROPÄISCHE PATENTSCHRIFT

(11) **EP 3 788 859 B1**
(45) Veröffentlichungstag und Bekanntmachung des Hinweises auf die Patenterteilung: **11.09.2024**
(21) Anmeldenummer: 20176825.6
(22) Anmeldetag: 27.05.2020
(51) Int. Cl.: A01D 41/127, A01D 41/14

(54) **VERFAHREN ZUM BETREIBEN EINES SCHNEIDWERKS SOWIE SCHNEIDWERK**
CUTTING MECHANISM AND METHOD FOR OPERATING A CUTTING MECHANISM
PROCÉDÉ DE FONCTIONNEMENT D'UN MÉCANISME DE COUPE ET MÉCANISME DE COUPE

(30) Priorität: 03.09.2019 DE 102019123506
(43) Veröffentlichungstag der Anmeldung: 10.03.2021
(73) Patentinhaber: CLAAS Selbstfahrende Erntemaschinen GmbH, 33428 Harsewinkel (DE)
(72) Erfinder: Rademacher, Thomas, 55425 Waldalgesheim (DE)
(74) Vertreter: CLAAS Gruppe

(56) Entgegenhaltungen:
- EP-A1- 3 300 580
- WO-A1-2014/023632
- US-A1- 2018 271 019

## Beschreibung

Die vorliegende Erfindung betrifft ein Verfahren zum Betreiben eines Schneidwerks gemäß dem Oberbegriff des Anspruches 1. Weiterhin betrifft die Erfindung ein Schneidwerk gemäß dem Oberbegriff des Anspruches 4. Ein Mähdrescher ist Gegenstand des Anspruches 11.

Schneidwerke dienen der Aufnahme von Erntegut, wobei dieses von einem Messerbalken geschnitten und anschließend von einer Einzugsschnecke zu einem Mittenbereich des Schneidwerks gefördert wird. Von dort gelangt das Erntegut durch eine rückwärtige Öffnung in dem Schneidwerk in einen Schrägförderer eines Mähdreschers, an dem das Schneidwerk angeordnet ist. Der Mähdrescher umfasst mehrere Arbeitsaggregate, die das zugeführte Erntegut bearbeiten. Dem Schrägförderer kann eine nach dem Tangentialflussprinzip arbeitendes Dreschvorrichtung nachgeordnet sein, welcher die Aufgabe zukommt, den Hauptanteil an Körnern in einem Druschvorgang aus dem Erntegut abzuscheiden. Der Dreschvorrichtung ist eine weitere Abscheidevorrichtung nachgeordnet, die als ein Hordenschüttler oder als zumindest ein nach dem Axialflussprinzip arbeitender Trennrotor ausgeführt ist. Alternativ kann auch eine nach dem Axialflussprinzip arbeitende Dresch-Abscheidevorrichtung vorgesehen sein.

Für die Durchführung eines optimalen Druschprozesses sollte das Erntegut mit den Fruchtständen voran der Dreschvorrichtung zugeführt werden. Hierdurch wird die Kornabscheidung am Dreschkorb der Dreschvorrichtung maximiert. Eine möglichst gleichmäßige, kontinuierliche Zuführung des Erntegutes führt zu einer gleichmäßigen Belastung der Dreschvorrichtung und der Abscheidevorrichtung, wodurch eine kontinuierliche Kornabscheidung bei gleichmäßig geringem Kornverlustniveau erreicht werden kann. Entsprechendes gilt für eine Reinigungsvorrichtung des Mähdreschers, welcher die ausgedroschenen bzw. abgeschiedenen Kornbestandteile zur Reinigung zugeführt werden.

Die Qualität der Zuführung des Ernteguts bestimmt sich bei der Gutaufnahme und Gutförderung durch das Schneidwerk. In Abhängigkeit von der Fruchtart sowie den Erntebedingungen kommen in der Regel Schneidwerke zum Einsatz, deren Schneidtischlänge durch eine Aktuatorik veränderbar ist. Je nach Länge der Halme und Lage der Fruchtstände bei auf dem Boden liegenden oder geneigten Beständen stellt ein Bediener des Mähdreschers eine Schneidtischlänge ein, um eine möglichst gleichmäßige Aufnahme des Erntegutes durch die Einzugsschnecke zu erreichen. Straußbildungen sollen durch die Vornahme der Einstellung der Schneidtischlänge ebenfalls vermieden werden. Das Einstellen der Schneidtischlänge kann manuell erfolgen, wobei es der Erfahrung des Bedieners obliegt, ob dieser die Einstellung überhaupt vornimmt bzw. diese an die sich ändernden Erntebedingungen während eines Erntevorganges anpasst. Da die Lage bzw. Ausrichtung des Erntegutes nach dem Erfassen durch die Einzugsschnecke für alle nachfolgenden Bearbeitungsschritte im Wesentlichen vorbestimmt ist, kommt dieser Einstellung ein besonderes Gewicht zu.

Um den Bediener von der Einstellung, Überwachung und Anpassung der Schneidtischlänge zu entlasten, ist aus der DE 10 2015 113 527 A1 ein Verfahren zur Automatisierung des Betriebs eines Schneidwerks bekannt. Dabei bilden das Schneidwerk und ein Fahrerassistenzsystem einen Schneidwerksautomaten, dessen Regelalgorithmen anhand einer benutzerseitigen Auswahl einer Ernteprozessstrategie festgelegt werden. Hierzu ist in einem Speicher einer Recheneinrichtung ein funktionales Systemmodell hinterlegt, welches funktionale Zusammenhänge der Arbeitsaggregate des Mähdreschers sowie des Schneidwerks abbildet, um basierend auf dem Systemmodell die autonome Ermittlung von Schneidwerksparametern vorzunehmen. Eine nicht näher spezifizierte Sensoranordnung dient der Erfassung des Ernteprozesszustands, wozu Einstellparameter, wie die Schneidtischlänge, des Schneidwerks zählen. WO 2014/023632 A1 zeigt ein gattungsgemäße Schneidwerk, wobei die Schneidtischlänge in Abhängigkeit der Messung eines Sensors erfolgt, der die Höhe vom zu erntenden Gut vor dem Messerbalken detektiert.

Ausgehend von dem vorstehend genannten Stand der Technik liegt der Erfindung die Aufgabe zugrunde, ein Verfahren zum Betreiben eines Schneidwerkes sowie ein Schneidwerk und einen Mähdrescher der eingangs genannten Art derart weiterzubilden, welche eine einfachere und kostengünstigere automatisierte Ansteuerung des Schneidwerks auszeichnen.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale der nebengeordneten Ansprüche 4 und 11. Die hierauf jeweils folgenden, abhängigen Ansprüche geben jeweils vorteilhafte Weiterbildungen der Erfindung wieder.

Gemäß dem Anspruch 1 wird ein Verfahren zum Betreiben eines Schneidwerks, wobei das Schneidwerk einen Schneidtisch, mit einer ansteuerbaren Aktuatorik, durch die eine Schneidtischlänge verändert wird, seitliche, im Wesentlichen orthogonal zum Schneidtisch angeordnete Seitenwände, durch die der Schneidtisch begrenzt wird, sowie zumindest eine sich zwischen den Seitenwänden erstreckende Einzugsschnecke, durch die aufgenommenes Erntegut in Querrichtung zu einer Austrittsöffnung im Mittenbereich des Schneidwerks gefördert wird, wobei durch zumindest einen oberhalb des Schneidtisches und vor der Einzugsschnecke angeordneten Sensor die Höhe von Erntegut unmittelbar vor der Einzugsschnecke detektiert wird, und dass die Signale des zumindest einen Sensors von einer Steuerungseinrichtung ausgewertet und zur automatischen Ansteuerung der Aktuatorik zur Adaption der Schneidtischlänge in Abhängigkeit von der detektierten Höhe verwendet werden. Die Adaption der Schneidtischlänge kann dynamisch durchgeführt werden. Durch die Überwachung des sich ausbildenden Höhenprofiles des Erntegutes vor der Einzugsschnecke können Gutstauerscheinungen im Schneidwerk detektiert werden. In Abhängigkeit von einer erkannten Gutanhäufung wird die Schneidtischlänge variiert, wodurch dem Erntegut mehr Raum gegeben wird, sich in Querrichtung gleichmäßiger zu verteilen und sich in Längsrichtung des Schneidtisches auszurichten, bevor es in den Wirkungsbereich der Einzugsschnecke gelangt. Besonders vorteilhaft ist dabei, dass der Bediener von der Aufgabe, die Schneidtischhänge an sich ändernde Erntebedingungen anzupassen, entlastet wird.

Insbesondere kann der zumindest eine Sensor an einer der Seitenwände angeordnet sein.

Gemäß einer bevorzugten Weiterbildung kann die Dynamik der Änderung der Schichthöhe des Erntegutes nach dem Austreten des Erntegutes im Mittenbereich des Schneidwerks detektiert werden. Hierdurch kann kompensiert werden, dass zwischen vor der Einzugsschnecke stehendem und mit der Einzugschnecke umlaufendem Erntegut nicht unterschieden werden kann. Die Dynamik der Schichthöhenänderung kann zusätzlich zur Ansteuerung der Aktuatorik herangezogen werden. Zudem kann durch die Auswertung der Schichthöhe die Auswirkung der Ansteuerung kontrolliert werden.

Weiterhin kann die Feuchtigkeit des Erntegutes detektiert werden. Die Feuchtigkeit des Erntegutes beeinflusst das Förderverhalten des Erntegutes.

Des Weiteren wird die eingangs gestellte Aufgabe durch ein Schneidwerk gemäß dem unabhängigen Anspruch 4 gelöst.

Gemäß dem Anspruch 4 wird ein Schneidwerk vorgeschlagen, umfassend:
- einen Schneidtisch, mit einer durch eine ansteuerbare Aktuatorik veränderlichen Schneidtischlänge,
- seitliche, im Wesentlichen orthogonal zum Schneidtisch angeordnete Seitenwände, die den Schneidtisch begrenzen, sowie
- zumindest eine sich zwischen den Seitenwänden erstreckende Einzugsschnecke zur Förderung von aufgenommenen Erntegut in Querrichtung zu einer Austrittsöffnung im Mittenbereich des Schneidwerks.

Erfindungsgemäß ist vorgesehen, dass oberhalb des Schneidtisches und vor der Einzugsschnecke zumindest ein Sensor zur Detektion der Höhe von Erntegut unmittelbar vor der Einzugsschnecke angeordnet ist, und dass dem Schneidwerk zumindest eine Steuerungseinrichtung zugeordnet ist, welche dazu eingerichtet ist, die Signale des zumindest einen Sensors auszuwerten und in Abhängigkeit von der detektierten Höhe die Aktuatorik zur Adaption der Schneidtischlänge anzusteuern. Durch die Überwachung des sich ausbildenden Höhenprofiles des Erntegutes vor der Einzugsschnecke können unter anderem Gutstauerscheinungen im Schneidwerk detektiert werden. In Abhängigkeit von einer erkannten Gutanhäufung wird die Schneidtischlänge variiert, wodurch dem Erntegut mehr Raum gegeben wird, sich in Querrichtung gleichmäßiger zu verteilen und sich in Längsrichtung des Schneidtisches auszurichten, bevor es in den Wirkungsbereich der Einzugsschnecke gelangt. Bei einer zunehmenden Höhe des sich vor der Einzugsschnecke aufrichtenden Erntegutes wird die Schneidtischlänge vergrößert. Dadurch wird eine Anpassung an Erntegut erzielt, welches z.B. überwiegend langstielig ist. Entsprechend findet eine Verkürzung der Schneidtischlänge statt, wenn z.B. die Stiellänge kürzer ist. Diese Steuerung bzw. Regelung ermöglicht eine kontinuierliche Erntegutzuführung zur Einzugsschnecke und insbesondere einen zumindest überwiegenden Einzug des Erntegutes mit dem Fruchtstand voran. Der Bildung von Erntegutsträußen durch vor der Einzugsschnecke stehendem Erntegut, mit der Folge eines sehr ungleichmäßigen Gutflusses im Mähdrescher sowie einer entsprechenden Geräuschbildung, wenn diese Erntegutsträuße kippen und schlagartig eingezogen werden, kann durch die Ansteuerung vermieden werden.

Dabei kann der zumindest eine Sensor an zumindest einer der Seitenwände des Schneidtisches angeordnet sein.

Besonders bevorzugt kann der zumindest eine Sensor höhenverstellbar an einer der Seitenwände angeordnet sein. Die Höhenverstellbarkeit des zumindest einen Sensors kann abgestuft, d.h. durch das Vorsehen von vertikal beabstandeten Befestigungspunkten in der Seitenwand, erfolgen. Alternativ kann die Höhenverstellbarkeit kontinuierlich realisiert sein, indem der zumindest eine Sensor entlang einer in der Seitenwand eingelassenen Schiene oder Führung vertikal verschieblich ist. Die Höhenverstellbarkeit ist bei einem Fruchtartwechsel, beispielsweise von Getreide auf Raps, vorteilhaft, da die Schichthöhe vor der Einzugschnecke bei Raps höher ist, als die Schichthöhe von Getreide. Eine an die Fruchtart Raps anpassbare vertikale Positionierung des einen Sensors ermöglicht damit auch die Ernte von Raps mit dynamisch adaptierbarer Schneidtischlänge, was beispielsweise bei Hybrid- und Zwerghybdridsorten im Vergleich zu hochwüchsigen Liniensorten sinnvoll sein kann.

Insbesondere kann der zumindest eine Sensor als eine Lichtschranke ausgeführt sein. Eine Lichtschranke stellt eine besonders günstige Ausführungsform eines Sensors dar, um die Schichthöhe vor der Einzugschnecke zu überwachen.

Alternativ oder zusätzlich kann der zumindest eine Sensor als eine Kamera ausgeführt sein. Insbesondere kann der zumindest eine Sensor als eine 3D-Kamera ausgeführt sein.

Gemäß einer bevorzugten Weiterbildung kann die Steuerungseinrichtung dazu eingerichtet sein, die Signale zumindest eines die Dynamik der Änderung der Schichthöhe des Erntegutes nach dem Austreten des Erntegutes durch die Öffnung im Mittenbereich des Schneidwerks detektierenden Sensors auszuwerten und zur Ansteuerung der Aktuatorik heranzuziehen. Hierdurch kann auf die Gleichmäßigkeit der Gutzuführung aufgrund der Adaption der Schneidtischlänge geschlossen werden. Die Dynamik der Änderung der Schichthöhe des Erntegutes kann zudem als weitere Steuer- oder Führungsgröße bei der Ansteuerung der Aktuatorik herangezogen werden.

Des Weiteren kann die Steuerungseinrichtung dazu eingerichtet sein, die Position einer an dem Schneidwerk angeordneten Haspel in Abhängigkeit von der Adaption der Schneidtischlänge automatisch anzupassen. Dadurch können Kollisionen zwischen Haspel und Messerbalken des Schneidwerks vermieden werden.

Weiterhin wird die eingangs gestellte Aufgabe durch einen Mähdrescher gelöst, der einen Einzugskanal, an dem ein Schneidwerk lösbar angeordnet ist, sowie eine Steuerungsvorrichtung umfasst, wobei das Schneidwerk nach einem der Ansprüche 4 bis 10 ausgebildet ist. Der Bediener des Mähdreschers wird von der Anpassung der Schneidtischlänge entlastet, so dass sich dieser stärker dem Erntevorgang und dem Führen des Mähdreschers widmen kann. Darüber hinaus wird der Wirkungsgrad des Mähdrusches verbessert, da eine gleichmäßigere Zuführung des Erntegutes erreicht wird. Zudem erfolgt die Zuführung des Erntegutes in den Einzugskanal vorwiegend mit den Fruchtständen voran, was zu einer Steigerung der Druschleistung des Dreschwerks des Mähdreschers führt.

Insbesondere kann der Mähdrescher einen Sensor zur Detektion der Schichthöhe im Einzugskanal aufweisen.

Zudem kann der Mähdrescher einen Sensor zur Detektion der Feuchtigkeit des Erntegutes aufweisen.

Die vorliegende Erfindung wird nachstehend anhand eines in den Zeichnungen dargestellten Ausführungsbeispieles näher erläutert.

Es zeigen:
- Fig. 1: eine schematische Darstellung eines Mähdreschers mit einem daran angeordneten Schneidwerk;
- Fig. 2: exemplarisch eine schematische Seitenansicht des Schneidwerks mit einer an langstieliges Erntegut angepasster Schneidtischlänge; und
- Fig. 3: exemplarisch eine schematische Seitenansicht des Schneidwerks mit einer an kurzstieliges Erntegut angepasster Schneidtischlänge.

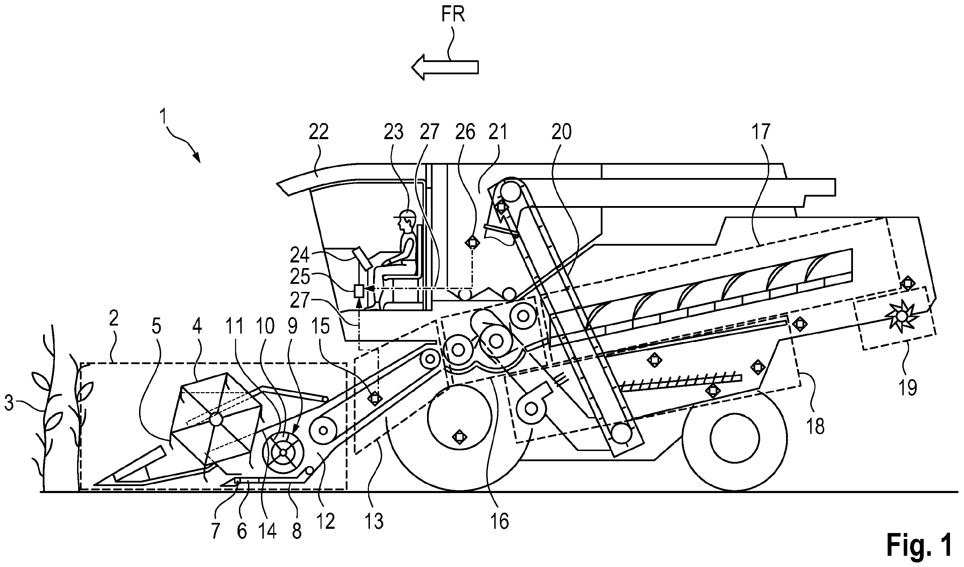

In Fig. 1 ist eine schematische Darstellung eines Mähdreschers 1 mit einem daran angeordneten Schneidwerk 2 gezeigt. Das Schneidwerk 2 dient dem Schneiden und Aufnehmen von Erntegut 3. Bei dem Erntegut 3 kann es sich beispielsweise um Getreide oder Raps handeln.

Das Schneidwerk 2 der dargestellten Erntemaschine 1 weist eine quer zur Fahrtrichtung FR des Mähdreschers 1 verlaufende Haspel 4 auf, die mittels daran angeordneter Zinken 5 bereits auf das noch ungeschnittene Erntegut 3 einwirkt. Die Haspel 4 hat in erster Linie die Aufgabe, das Erntegut einem Messerbalken 6, der an einer beweglichen Messerleiste angeordnete Messer 7 aufweist, zuzuführen. Die Messerleiste mit den Messern 7 oszilliert mit einer Schnittfrequenz, so dass das Erntegut geschnitten wird und auf einen längenveränderlichen Schneidtisch 8 fällt, an dessen Vorderseite sich der Messerbalken 6 befindet. Der Schneidtisch 8 ist durch eine - in Fig. 1 nicht dargestellte - Aktuatorik 31, insbesondere durch Hydraulikzylinder, in seiner Länge verstellbar. Dabei bedeutet eine Verstellung der Länge des Schneidtisches 8 ein Ausfahren oder Einfahren des Schneidtisches 8 in oder entgegen der Fahrtrichtung FR. Üblicherweise wird der Schneidtisch 8 vor dem Beginn des Ernteprozesses in Abhängigkeit von der Erntegutart auf eine Grundlänge eingestellt.

Das geschnittene Erntegut 3 wird, ggf. unter weiterer Einwirkung durch die Haspel 4, mittels einer Einzugschnecke 9 einem Einzugkanal 13 zugeführt. Hierfür ist die Einzugschnecke 9 mit wendelförmig angeordneten Blechen 10 ausgestattet, die beidseits eines mittleren Bereichs der Einzugschnecke 9, der auch als "Einzugsbereich" bezeichnet wird, angeordnet sind. Dadurch wird das geschnittene Erntegut 3 zunächst zum Einzugsbereich der Einzugschnecke 9 und von dort zu einer Austrittsöffnung im Mittenbereich des Schneidwerks 2 gefördert, an den sich ein Einzugkanal 13 anschließt. Das Schneidwerk 2 ist an dem Einzugkanal 13 lösbar befestigt.

Im Einzugsbereich sind der Einzugschnecke 9 mehrere Einzugfinger 11 zugeordnet, die bezogen auf die Walzendrehung jeweils zyklisch in einem Ausfahrwinkel der Einzugsschnecke 9 aus der Einzugschnecke 9 ausfahren und in einem Einfahrwinkel der Einzugsschnecke 9 in die Einzugschnecke 9 einfahren. Das Einfahren der Einzugfinger 11 ist erforderlich, um zu vermeiden, dass eingezogenes Erntegut 3 vollständig um die Einzugschnecke 9 herumläuft, ohne an den Einzugkanal 13 übergeben zu werden. Alle vorstehend genannten Komponenten des Schneidwerks 2 sind an einem Trägerrahmen 12 angeordnet, der sich aus mehreren Rahmenteilen zusammensetzt. Der Trägerrahmen 12 umfasst unter anderem seitliche, im Wesentlichen orthogonal zum Schneidtisch 8 angeordnete Seitenwände 14, durch die der Schneidtisch 8 begrenzt wird.

In dem Einzugkanal 13 ist ein Schichthöhensensor 15 angeordnet, welcher der kontinuierlichen Erfassung der Schichthöhe des von dem Schneidwerk 2 zugeführten Erntegutes 3 dient. An den Einzugkanal 13 schließt sich ein Dreschwerk 16 an, welches im dargestellten Ausführungsbeispiel nach dem Tangentialflussprinzip arbeitet. Das Dreschwerk 16 umfasst mehrere Dreschtrommeln, die abschnittsweise von Dreschkörben umschlossen sind. Dem Dreschwerk 16 ist eine Abscheideanordnung 17 prozesstechnisch nachgelagert. Der dem Dreschwerk 16 zugeführte Erntegutstrom wird im Anschluss - ohne das bereits hier durch die Dreschkörbe abgeschiedene Korngut - der Abscheideanordnung 17 zugeführt. In der Abscheideanordnung 17 wird das Erntegut mit dem in ihm verbliebenen Kornanteil so bewegt, z. B. geschüttelt, dass auch das verbliebene Korngut möglichst aus dem Stroh und dem sonstigen Erntegut herausgetrennt wird. Das im Dreschwerk 16 und der Abscheideanordnung 17 gewonnene Korngut wird dann einer Reinigungsanordnung 18 zugeführt. In der Reinigungsanordnung 18, welche regelmäßig mehrstufig ist, werden dann noch bis hierher im Korngut mitgeführte Nichtkornbestandteile, z. B. Spreu und Strohteile, sowie unausgedroschenes Material, wie etwa Ähren, Spitzen oder Grannen, von dem Korngut getrennt. Anschließend gelangt das gereinigte Korngut mittels eines Kornelevator 20 in einen Korntank 21. Das ausgedroschene Stroh - also das verbliebene Erntegut in der Abscheideanordnung 17 - wird von der Erntemaschine 1 abgelegt, z. B. als Schwad entlang der Fahrspur oder zuvor von einer Häcksel- und Verteilanordnung 19 zerkleinert. In dem Korntank 21 oder an einer anderen Stelle entlang des Gutflusses im Mähdrescher 1 kann ein Feuchtigkeitssensor 26 angeordnet sein.

Der Mähdrescher 1 weist eine Kabine 22 auf, in welcher ein Bediener 23 unter anderem mittels einer Eingabe-Ausgabeeinheit 24 Daten von einer Steuerungseinrichtung 25 angezeigt bekommt oder Daten an diese übermitteln kann. Die Steuerungseinrichtung 25 kommuniziert durch ein Bussystem 27 mit den Sensoren 15, 26 und den Aktuatoren des Mähdreschers 1 sowie des Schneidwerks 2.

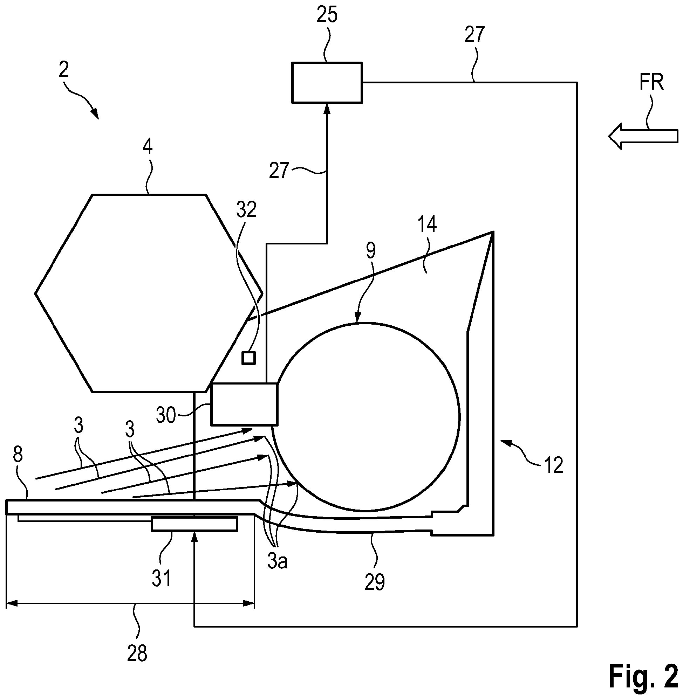

Fig. 2 zeigt exemplarisch eine schematische Seitenansicht des Schneidwerks 2 mit einer an langstieliges Erntegut 3 angepassten Schneidtischlänge 28. Die Einzugschnecke 9 ist oberhalb einer ortsfesten Schneidwerkmulde 29 angeordnet. Der Schneidtisch 8 ist gegenüber der Schneidwerkmulde 29 in Fahrtrichtung FR gesehen ausgefahren dargestellt, um abgeschnittenes langstieliges Erntegut 3 aufzunehmen, wobei -schematisch dargestellte - Fruchtstände 3a des Erntegutes 3 in Richtung der Einzugschnecke 9 weisen. An einer der Seitenwände 14 ist oberhalb des Schneidtisches 8 und vor der Einzugsschnecke 9 ein Sensor 30 angeordnet, welcher dazu eingerichtet ist, die die Höhe des vom Schneidwerk 2 aufgenommenen Erntegutes 3 unmittelbar vor der Einzugsschnecke 9 zu detektieren. Die Signale des zumindest einen Sensors 30 werden von der Steuerungseinrichtung 25 ausgewertet und zur automatischen Ansteuerung der Aktuatorik 31 zur dynamischen Adaption der Schneidtischlänge 28 in Abhängigkeit von der detektierten Höhe des Erntegutes 3 vor der Einzugsschnecke 9 verwendet. Die Aktuatorik 31 ist bevorzugt als zumindest ein Hydraulikzylinder ausgeführt.

Der zumindest eine Sensor 30 kann als eine Lichtschranke ausgeführt sein. Alternativ oder zusätzlich kann der zumindest eine Sensor 30 als eine Kamera, insbesondere eine 3D-Kamera ausgeführt sein.

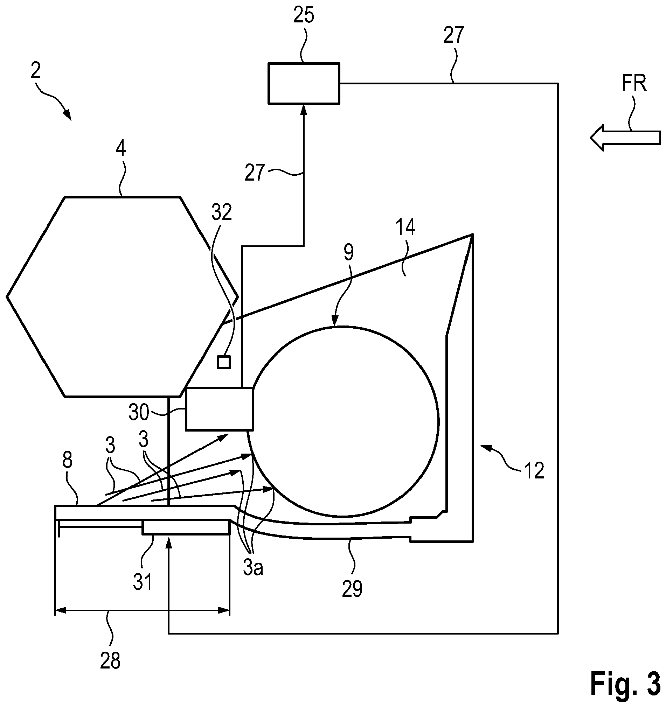

Die Darstellung in Fig. 3 zeigt exemplarisch eine schematische Seitenansicht des Schneidwerks 2 mit einer an kurzstieliges Erntegut 3 angepasster Schneidtischlänge 28. Der zumindest eine Sensors 30 ist höhenverstellbar an der Seitenwand 14 angeordnet. Die Höhenverstellbarkeit des zumindest einen Sensors 30 kann abgestuft, d.h. durch das Vorsehen von vertikal beabstandeten Befestigungspunkten 32 in der Seitenwand 14, erfolgen. Alternativ kann die Höhenverstellbarkeit kontinuierlich realisiert sein, indem der zumindest eine Sensor 30 entlang einer Schiene oder Führung in der Seitenwand 14 vertikal verschieblich ist. Die Höhenverstellbarkeit ist bei einem Fruchtartwechsel, beispielsweise von Getreide auf Raps, vorteilhaft, da die Schichthöhe des aufgenommenen Erntegutes 3 vor der Einzugschnecke 9 bei Raps höher ist, als die Schichthöhe von Getreide. Eine an die Fruchtart Raps anpassbare vertikale Positionierung des einen Sensors 30 ermöglicht damit auch die Ernte von Raps mit dynamisch adaptierbarer Schneidtischlänge 28, was beispielsweise bei Hybrid- und Zwerghybdridsorten im Vergleich zu hochwüchsigen Liniensorten sinnvoll sein kann.

Durch die Überwachung des sich ausbildenden Höhenprofiles des Erntegutes 3 vor der Einzugschnecke 9 können unter anderem Gutstauerscheinungen im Schneidwerk 2 detektiert werden. In Abhängigkeit von einer erkannten Gutanhäufung wird die Schneidtischlänge 28 variiert, wodurch dem Erntegut 3 mehr Raum gegeben wird, sich in Querrichtung, d.h. über die Breite des Schneidtisches 8 hinweg, gleichmäßiger zu verteilen und sich in Längsrichtung des Schneidtisches 8 auszurichten, bevor es in den Wirkungsbereich der Einzugschnecke 9 gelangt. Hierdurch kann einem Gutstau vorgebeugt werden. Bei einer zunehmenden Höhe des sich vor der Einzugsschnecke 9 aufrichtenden Erntegutes 3 wird die Schneidtischlänge 28 vergrößert. Dadurch wird eine Anpassung an Erntegut erzielt, welches z.B. überwiegend langstielig ist. Entsprechend findet eine Verkürzung der Schneidtischlänge 28 statt, wenn z.B. die Stiellänge des Erntegutes 3 kürzer ist. Diese Steuerung bzw. Regelung ermöglicht eine kontinuierliche Erntegutzuführung zur Einzugschnecke 9 und insbesondere einen zumindest überwiegenden Einzug des Erntegutes 3 jeweils mit dem Fruchtstand 3a voran. Der Bildung von Erntegutsträußen durch vor der Einzugschnecke 9 stehendem Erntegut 3, mit der Folge eines sehr ungleichmäßigen Gutflusses im Mähdrescher 1 sowie einer entsprechenden Geräuschbildung, wenn diese Erntegutsträuße kippen und schlagartig eingezogen werden, kann durch die Ansteuerung vermieden werden.

Weiterhin kann die Steuerungseinrichtung 25 dazu eingerichtet sein, die Signale zumindest eines die Dynamik der Änderung der Schichthöhe des Erntegutes 3 nach dem Austreten des Erntegutes durch die Öffnung im Mittenbereich des Schneidwerks 2 detektierenden Sensors auszuwerten und zur Ansteuerung der Aktuatorik 31 heranzuziehen. Hierzu können zusätzlich zur kontinuierlichen Detektion der Schichthöhe des Erntegutes 3 vor der Einzugschnecke 9 die Signale des in dem Einzugkanal 13 angeordneten Schichthöhensensors 15 herangezogen werden, um die Aktuatorik 31 anzusteuern. Die Auswertung der Signale des Schichthöhensensors 15 liefert Informationen über die Gleichmäßigkeit des durch die Austrittsöffnung im Mittenbereich des Schneidwerks 2 in den Einzugkanal 13 gelangenden Erntegutes 3. Durch die Erfassung der Dynamik der Änderung der Schichthöhe kann kompensiert werden, dass zwischen vor der Einzugschnecke 9 stehendem und mit der Einzugschnecke 9 umlaufendem Erntegut durch den zumindest einen Sensor 30 nicht unterschieden werden kann.

Des Weiteren können die Signale des Feuchtigkeitssensor 26 bei der Ansteuerung der Aktuatorik 31 herangezogen werden. Der Feuchtigkeitsgehalt des Erntegutes 3 beeinflusst die Schichthöhe vor der Einzugschnecke 9 sowie das Einzugsverhalten.

Weiterhin ist die Steuerungseinrichtung 25 dazu eingerichtet, die Position der an dem Schneidwerk 2 angeordneten Haspel 4 in Abhängigkeit von der Adaption der Schneidtischlänge 28 anzupassen, um Kollisionen mit dem Messerbalken 6 zu vermeiden.

### Bezugszeichenliste

| | | | |
|---|---|---|---|
| 1 | Mähdrescher | 30 | Sensor |
| 2 | Schneidwerk | 31 | Aktuatorik |
| 3 | Erntegut | 32 | Befestigungspunkt |
| 3a | Fruchtstand | | |
| 4 | Haspel | FR | Fahrtrichtung |
| 5 | Zinken | | |
| 6 | Messerbalken | | |
| 7 | Messer | | |
| 8 | Schneidtisch | | |
| 9 | Einzugschnecke | | |
| 10 | Blech | | |
| 11 | Einzugfinger | | |
| 12 | Trägerrahmen | | |
| 13 | Einzugkanal | | |
| 14 | Seitenwand | | |
| 15 | Schichthöhensensor | | |
| 16 | Dreschwerk | | |
| 17 | Abscheideanordnung | | |
| 18 | Reinigungsanordnung | | |
| 19 | Häcksel- und Verteilanordnung | | |
| 20 | Kornelevator | | |
| 21 | Korntank | | |
| 22 | Kabine | | |
| 23 | Bediener | | |
| 24 | Eingabe-Ausgabeeinheit | | |
| 25 | Steuerungseinrichtung | | |
| 26 | Feuchtigkeitssensor | | |
| 27 | Bussystem | | |
| 28 | Schneidtischlänge | | |
| 29 | Schneidwerkmulde | | |

## Patentansprüche

1. Verfahren zum Betreiben eines Schneidwerks (2), wobei das Schneidwerk (2) einen Schneidtisch (8), mit einer ansteuerbaren Aktuatorik (31), durch die eine Schneidtischlänge (28) verändert wird, seitliche, im Wesentlichen orthogonal zum Schneidtisch (8) angeordnete Seitenwände (14), durch die der Schneidtisch (8) begrenzt wird, sowie zumindest eine sich zwischen den Seitenwänden (14) erstreckende Einzugschnecke (9), durch die aufgenommenes Erntegut (3) in Querrichtung zu einer Austrittsöffnung im Mittenbereich des Schneidwerks (2) gefördert wird, **dadurch gekennzeichnet, dass** durch zumindest einen oberhalb des Schneidtisches (8) und vor der Einzugschnecke (9) angeordneten Sensor (30) die Höhe des aufgenommenen Ernteguts (3) unmittelbar vor der Einzugschnecke (9) detektiert wird, und dass die Signale des zumindest einen Sensors (30) von einer Steuerungseinrichtung (25) ausgewertet und zur automatischen Ansteuerung der Aktuatorik (31) zur Adaption der Schneidtischlänge (28) in Abhängigkeit von der detektierten Höhe verwendet werden.

2. Verfahren nach Anspruch 1, **dadurch gekennzeichnet, dass** die Dynamik der Änderung der Schichthöhe des Erntegutes (3) nach dem Austreten des Erntegutes (3) durch die Öffnung im Mittenbereich des Schneidwerks (2) detektiert wird.

3. Verfahren nach Anspruch 1 oder 2, **dadurch gekennzeichnet, dass** die Feuchtigkeit des Erntegutes (3) detektiert wird.

4. Schneidwerk (2), umfassend:
- einen Schneidtisch (8), mit einer durch eine ansteuerbare Aktuatorik (31) veränderlichen Schneidtischlänge (28),
- seitliche, im Wesentlichen orthogonal zum Schneidtisch (8) angeordnete Seitenwände (14), die den Schneidtisch (8) begrenzen, sowie
- zumindest eine sich zwischen den Seitenwänden (14) erstreckende Einzugschnecke (9) zur Förderung von aufgenommenen Erntegut (3) in Querrichtung zu einem Mittenbereich des Schneidwerks (2),
**dadurch gekennzeichnet, dass**
oberhalb des Schneidtisches (8) und vor der Einzugschnecke (9) zumindest ein Sensor (30) zur Detektion der Höhe des aufgenommenen Ernteguts (3) unmittelbar vor der Einzugschnecke (9) angeordnet ist, und
dass dem Schneidwerk (2) zumindest eine Steuerungseinrichtung (25) zugeordnet ist, welche dazu eingerichtet ist, die Signale des zumindest einen Sensors (30) auszuwerten und in Abhängigkeit von der detektierten Höhe die Aktuatorik (31) zur Adaption der Schneidtischlänge (28) automatisch anzusteuern.

5. Schneidwerk (2) nach Anspruch 4, **dadurch gekennzeichnet, dass** der zumindest eine Sensor (30) an einer der Seitenwände (14) angeordnet ist.

6. Schneidwerk (2) nach Anspruch 5, **dadurch gekennzeichnet, dass** der zumindest eine Sensor (30) höhenverstellbar an einer der Seitenwände (14) angeordnet ist.

7. Schneidwerk (2) nach einem der Ansprüche 4 bis 6, **dadurch gekennzeichnet, dass** der zumindest eine Sensor (30) als eine Lichtschranke ausgeführt ist.

8. Schneidwerk (2) nach einem der Ansprüche 4 bis 7, **dadurch gekennzeichnet, dass** der zumindest eine Sensor (30) als eine Kamera ausgeführt ist.

9. Schneidwerk (2) nach einem der Ansprüche 4 bis 8, **dadurch gekennzeichnet, dass** die Steuerungseinrichtung (25) dazu eingerichtet ist, die Signale zumindest eines die Dynamik der Änderung der Schichthöhe des Erntegutes (3) nach dem Austreten des Erntegutes (3) durch die Öffnung im Mittenbereich des Schneidwerks (2) detektierenden Sensors (15) auszuwerten und zur Ansteuerung der Aktuatorik (31) heranzuziehen.

10. Schneidwerk (2) nach einem der Ansprüche 4 bis 9, **dadurch gekennzeichnet, dass** die Steuerungseinrichtung (25) dazu eingerichtet ist, die Position einer an dem Schneidwerk (2) angeordneten Haspel (4) in Abhängigkeit von der Adaption der Schneidtischlänge (28) anzupassen.

11. Mähdrescher (1), umfassend einen Einzugskanal, an dem ein Schneidwerk (2) lösbar angeordnet ist, sowie eine Steuerungsvorrichtung (25), **dadurch gekennzeichnet, dass** das Schneidwerk (2) nach einem der Ansprüche 4 bis 10 ausgebildet ist.

12. Mähdrescher (1) nach Anspruch 11, **dadurch gekennzeichnet, dass** der Mähdrescher (1) einen Sensor (15) zur Detektion der Schichthöhe im Einzugskanal (13) aufweist.

13. Mähdrescher (1) nach Anspruch 11 oder 12, **dadurch gekennzeichnet, dass** der Mähdrescher (1) einen Sensor (26) zur Detektion der Feuchtigkeit des Erntegutes (1) aufweist.

## Claims

1. A method for operating a cutting assembly (2), wherein the cutting assembly (2) has a cutter bar (8) with a controllable actuator system (31) via which a cutter bar length (28) is changed, lateral side walls (14) disposed substantially orthogonally to the cutter bar (8) which delimit the cutter bar (8), as well as at least one intake auger (9) extending between the side walls (14), through which the harvested material (3) which has been picked up is conveyed in a direction transverse to a discharge opening in the central region of the cutting assembly (2), **characterized in that** the height of the harvested material which has been picked up is detected directly in front of the intake auger (9) by at least one sensor (30) which is disposed above the cutter bar (8) and in front of the intake auger (9), and **in that** the signals from the at least one sensor (30) are analysed by a control device (25) and are used for the automatic control of the actuator system (31) in order to adapt the cutter bar length (28) as a function of the detected height.

2. The method according to claim 1, **characterized in that** the dynamics of the change in the height of the layer of harvested material (3) after the harvested material (3) has been discharged through the opening in the central region of the cutting assembly (2) are detected.

3. The method according to claim 1 or claim 2, **characterized in that** the moisture of the harvested material (3) is detected.

4. A cutting assembly (2), comprising:
- a cutter bar (8), with a cutter bar length (28) which can be changed by means of a controllable actuator system (31),
- lateral side walls (14) which are disposed substantially orthogonally to the cutter bar (8), which delimit the cutter bar (8), as well as
- at least one intake auger (9) extending between the side walls (14) for conveying harvested material (3) which has been picked up in the direction transverse to a central region of the cutting assembly (2),
**characterized in that**
at least one sensor (30) for detecting the height of the harvested material (3) which has been picked up is disposed directly in front of the intake auger (9) above the cutter bar (8) and in front of the intake auger (9), and
**in that** at least one control device (25) is associated with the cutting assembly (2) and is configured to analyse the signals from the at least one sensor (30) and to automatically control the actuator system (31) as a function of the detected height in order to adapt the cutter bar length (28).

5. The cutting assembly (2) according to claim 4, **characterized in that** the at least one sensor (30) is disposed on one of the side walls (14).

6. The cutting assembly (2) according to claim 5, **characterized in that** the at least one sensor (30) is disposed on one of the side walls (14) in a height-adjustable manner.

7. The cutting assembly (2) according to one of claims 4 to 6, **characterized in that** the at least one sensor (30) is configured as a photoelectric barrier.

8. The cutting assembly (2) according to one of claims 4 to 7, **characterized in that** the at least one sensor (30) is configured as a camera.

9. The cutting assembly (2) according to one of claims 4 to 8, **characterized in that** the control device (25) is configured to analyse and use the signals from at least one sensor (15) detecting the dynamics of the change in the height of the layer of harvested material (3) after the harvested material (3) has been discharged through the opening in the central region of the cutting assembly (2) in order to control the actuator system (31).

10. The cutting assembly (2) according to one of claims 4 to 9, **characterized in that** the control device (25) is configured to adjust the position of a reel (4) disposed on the cutting assembly (2) as a function of the adaptation of the cutter bar length (28).

11. A combine harvester (1) comprising an intake channel on which a cutting assembly (2) is releasably disposed, as well as a control device (25), **characterized in that** the cutting assembly (2) is configured in accordance with one of claims 4 to 10.

12. The combine harvester (1) according to claim 11, **characterized in that** the combine harvester (1) has a sensor (15) for the detection of the height of the layer in the intake channel (13).

13. The combine harvester (1) according to claim 11 or claim 12, **characterized in that** the combine harvester (1) has a sensor (26) for detecting the moisture in the harvested material (1).

## Revendications

1. Procédé de fonctionnement d'un tablier de coupe (2), selon lequel le tablier de coupe (2) comprend une table de coupe (8), dotée d'un système d'actionnement (31) susceptible d'être activé, par lequel une longueur de table de coupe (28) est modifiée, des parois latérales (14) disposées sur les côtés, de manière sensiblement orthogonale à la table de coupe (8), par lesquelles la table de coupe (8) est délimitée, ainsi qu'au moins une vis d'alimentation (9) qui s'étend entre les parois latérales (14) et par laquelle la récolte (3) ramassée est transportée dans la direction transversale, vers une ouverture de sortie située dans la partie centrale du tablier de coupe (2), **caractérisé en ce qu'**au moins un capteur (30), qui est disposé au-dessus de la table de coupe (8) et avant la vis d'alimentation (9), détecte la hauteur de la récolte (3) ramassée, directement devant la vis d'alimentation (9), et **en ce que** les signaux du capteur (30), au nombre d'au moins un, sont évalués par un dispositif de commande (25) et sont utilisés pour l'activation automatique du système d'actionnement (31), en vue de l'adaptation de la longueur de table de coupe (28), en fonction de la hauteur détectée.

2. Procédé selon la revendication 1, **caractérisé en ce que** la dynamique de la variation de la hauteur de couche de la récolte (3) est détectée après la sortie de la récolte (3) à travers l'ouverture dans la partie centrale du tablier de coupe (2).

3. Procédé selon la revendication 1 ou 2, **caractérisé en ce que** l'humidité de la récolte (3) est détectée.

4. Tablier de coupe (2), comprenant :
- une table de coupe (8), avec une longueur de table de coupe (28) qui peut être modifiée par un système d'actionnement (31) activable,
- des parois latérales (14) qui sont disposées sur les côtés, de manière sensiblement orthogonale à la table de coupe (8), et délimitent la table de coupe (8), ainsi que
- au moins une vis d'alimentation (9) qui s'étend entre les parois latérales (14) et est destinée au transport de la récolte (3) ramassée, dans la direction transversale, vers une partie centrale du tablier de coupe (2),
**caractérisé en ce que**
au moins un capteur (30) est disposé au-dessus de la table de coupe (8) et avant la vis d'alimentation (9), en vue de la détection de la hauteur de la récolte (3) ramassée, directement devant la vis d'alimentation (9), et **en ce que**
au moins un dispositif de commande (25) est associé au tablier de coupe (2) et est conçu pour évaluer les signaux du capteur (30), au nombre d'au moins un, et pour activer automatiquement le système d'actionnement (31), en vue de l'adaptation de la longueur de table de coupe (28), en fonction de la hauteur détectée.

5. Tablier de coupe (2) selon la revendication 4, **caractérisé en ce que** le capteur (30), au nombre d'au moins un, est disposé sur l'une des parois latérales (14).

6. Tablier de coupe (2) selon la revendication 5, **caractérisé en ce que** le capteur (30), au nombre d'au moins un, est disposé de manière réglable en hauteur sur l'une des parois latérales (14).

7. Tablier de coupe (2) selon une des revendications 4 à 6, **caractérisé en ce que** le capteur (30), au nombre d'au moins un, est réalisé sous la forme d'une barrière photoélectrique.

8. Tablier de coupe (2) selon une des revendications 4 à 7, **caractérisé en ce que** le capteur (30), au nombre d'au moins un, est réalisé sous la forme d'une caméra.

9. Tablier de coupe (2) selon une des revendications 4 à 8, **caractérisé en ce que** le dispositif de commande (25) est conçu pour évaluer les signaux d'au moins un capteur (15) détectant la dynamique de la variation de la hauteur de couche de la récolte (3), après la sortie de la récolte (3) par l'ouverture dans la partie centrale du tablier de coupe (2), et les utiliser pour l'activation du système d'actionnement (31).

10. Tablier de coupe (2) selon une des revendications 4 à 9, **caractérisé en ce que** le dispositif de commande (25) est conçu pour adapter la position d'un rabatteur (4) disposé sur le tablier de coupe (2), en fonction de l'adaptation de la longueur de table de coupe (28).

11. Moissonneuse-batteuse (1), comprenant un canal d'alimentation, sur lequel un tablier de coupe (2) est disposé de façon amovible, ainsi qu'un dispositif de commande (25), **caractérisée en ce que** le tablier de coupe (2) est réalisé conformément à l'une des revendications 4 à 10.

12. Moissonneuse-batteuse (1) selon la revendication 11, **caractérisée en ce que** la moissonneuse-batteuse (1) présente un capteur (15) destiné à détecter la hauteur de couche dans le canal d'alimentation (13).

13. Moissonneuse-batteuse (1) selon la revendication 11 ou 12, **caractérisée en ce que** la moissonneuse-batteuse (1) présente un capteur (26) destiné à détecter l'humidité de la récolte (1).
